# EUROPEAN PATENT SPECIFICATION

(11) **EP 2 080 307 B1**
(45) Date of publication and mention of the grant of the patent: **14.01.2015**
(21) Application number: 07833142.8
(22) Date of filing: 02.10.2007
(51) Int. Cl.: H04L 1/18, H04L 27/26

(54) **METHOD FOR RETRANSMITTING IN THE MULTI-CARRIERS SYSTEM**
VERFAHREN ZUM WEITERSENDEN IM MEHRTRÄGERSYSTEM
PROCÉDÉ DE RETRANSMISSION DANS UN SYSTÈME À PLUSIEURS PORTEUSES

(30) Priority: 02.10.2006 US 827856 P; 05.01.2007 KR 20070001216
(43) Date of publication of application: 22.07.2009
(73) Proprietor: LG Electronics, Inc., Seoul 150-721 (KR)
(72) Inventor: KIM, Bong Hoe, Anyang-si, Gyeonggi-do 431-749 (KR); KIM, Hak Seong, Anyang-si, Gyeonggi-do 431-749 (KR); KIM, Ki Jun, Anyang-si, Gyeonggi-do 431-749 (KR); YOON, Suk Hyon, Anyang-si, Gyeonggi-do 431-749 (KR); AHN, Joon Kui, Anyang-si, Gyeonggi-do 431-749 (KR); YUN, Young Woo, Anyang-si, Gyeonggi-do 431-749 (KR); KIM, Eun Sun, Anyang-si, Gyeonggi-do 431-749 (KR); LEE, Dae Won, Anyang-si, Gyeonggi-do 431-749 (KR)
(74) Representative: Cabinet Plasseraud
(86) International application number: PCT/KR2007/004829
(87) International publication number: WO 2008/041822

(56) References cited:
- EP-A1- 1 492 258
- EP-A1- 1 545 040
- EP-A1- 1 557 968
- WO-A1-2006/054171
- US-A1- 2005 207 345
- SAMSUNG: "Low Overhead Asynchronous Adaptive Hybrid ARQ", 3GPP DRAFT; R1-061338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20060502, 2 May 2006 (2006-05-02), XP050102215, [retrieved on 2006-05-02]

## Description

### [Technical Field]

The present invention relates to a multi-carrier system, and more particularly to a retransmission method for use in the multi-carrier system.

### [Background Art]

A mobile communication system allows each base station or Node-B located in a single cell or sector to communicating with a plurality of user terminals (e.g., user equipments) over a wireless channel environment.

In the case of a multi-carrier system or other systems similar to the multi-carrier system, the base station receives packet traffic from a wired Internet network in the multi-carrier system or other similar systems, and transmits the received packet traffic to each terminal using a predetermined communication scheme.

In this case, the base station determines a downlink scheduling, so that it determines a variety of information according to the downlink scheduling, for example, a user terminal which will receive data from the base station, a frequency area to be used for data transmission to the terminal, and timing information indicating a transmission time of the data to be transmitted to the terminal.

The base station receives packet traffic from the user terminal according to a predetermined communication scheme, and demodulates the received packet traffic, so that it transmits the received packet traffic to the wired Internet network.

The base station determines an uplink scheduling, so that it determines a variety of information according to the uplink scheduling, for example, a user terminal which will transmit uplink data, a frequency band to be used for the uplink data transmission, and timing information indicating a transmission time of the uplink data. Generally, a user terminal having a superior or good channel status is scheduled to transmit/receive data using more frequency resources during a longer time.

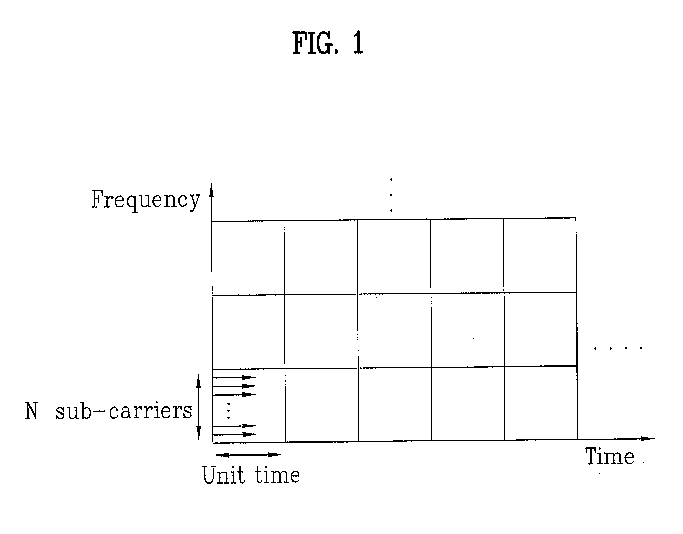

FIG. 1 is a conceptual diagram illustrating a time-frequency resource block for use in a multi-carrier system.

Communication resources for use in a multi-carrier system or other similar systems can be largely divided into a time area and a frequency area.

The communication resources can be defined by resource blocks. Each resource block includes N sub-carriers and/or M sub-frames, and is configured in units of a predetermined time. In this case, N may be set to "1", and M may also be set to "1".

A single square of FIG. 1 indicates a single resource block. A single resource block uses several sub-carriers as a single axis, and uses a unit of a predetermined time as another axis.

A base station in a downlink selects a user terminal according to a predetermined scheduling rule, and allocates one or more resource blocks to the selected user terminal. The base station transmits data to the selected user terminal using the allocated resource blocks.

According to uplink transmission, the base station selects the user terminal, and allocates one or more resource blocks to the selected user terminal according to a predetermined scheduling rule.

The user terminal receives scheduling information, indicating that a predetermined resource block has been allocated to the user terminal itself, from the base station, and transmits uplink data using the allocated resource.

Although data has been transmitted according to the scheduling rule, the data may be unexpectedly damaged or lost during the transmission process. In this case, there are proposed a variety method for controlling the faulty or erroneous operation, for example, an automatic repeat request (ARQ) scheme and a hybrid ARQ (HARQ) scheme, etc. The confirmation of the faulty or erroneous operation according to the above-mentioned two schemes is operated in frame units. Data transmitted during the frame unit is hereinafter referred to as a frame.

The ARQ scheme waits for transmission of the ACK signal after transmitting a single frame. If a reception end correctly receives data of the frame, it transmits the ACK signal. However, if an unexpected error occurs in the frame, the reception end transmits a negative-ACK (NACK) signal, and deletes the received erroneous frame from its own buffer.

If the transmission end receives the ACK signal, it transmits the next frame. Otherwise, if the transmission end receives the NACK signal, it retransmits the frame.

The HARQ scheme allows the reception end to transmit the NACK signal to the transmission end on the condition that the received frame cannot be demodulated. However, differently from the ARQ scheme, the HARQ scheme does not delete the pre-received frame from the buffer, and stores the pre-received frame in the buffer for a predetermined period of time. Therefore, if the above-mentioned frame is re-transmitted, in the HARQ scheme the reception end combines the pre-received frame with a re-transmitted frame, thereby it could increase the success rate of data reception.

In recent time, many users prefer the HARQ scheme to the basic ARQ scheme.

There are a variety of types of the HARQ scheme. For example, the HARQ scheme can be classified into a synchronous HARQ scheme and an asynchronous HARQ scheme.

The synchronous HARQ scheme is designed to perform the next retransmission of data at a timing point determined by a system if initial transmission of data fails. For example, if it is assumed that the retransmission timing point is set to a fourth time unit after the initial transmission failure occurs, there is no need to additionally indicate the fourth time unit because the retransmission timing between the base station and the user terminal is predetermined.

In other words, if the transmission end of data receives the NACK signal, it re-transmits the frame every fourth time unit until receiving the ACK signal.

In the meantime, the asynchronous HARQ scheme is performed by the newly-scheduled retransmission timing and the additional retransmission scheduling information transmission. In other words, a timing point at which the previously-failed frame is re-transmitted is variable with a variety of factors such as a channel status.

The HARQ scheme can be classified into a channel-adaptive HARQ scheme and a channel-non-adaptive scheme according to information indicating whether a channel status is reflected in allocation of resources used for retransmission.

The channel-non-adaptive HARQ scheme enables resource blocks used for retransmission, and a MCS (Modulation and Coding Scheme) level defining frame modulation and coding methods to be operated according to a specific scheme predetermined by initial transmission.

The channel-adaptive HARQ scheme allows the above-mentioned resource blocks and the MCS level to be variable with channel status information.

For example, according to the channel-non-adaptive HARQ scheme, a transmission end transmits data using eight resource blocks during the initial transmission, and then re-transmits the data using the same eight resource blocks irrespective of a channel status acquired by retransmission of the data.

On the other hand, according to the channel- adaptive HARQ scheme, although data is initially transmitted using 8 resource blocks, the data may also be re-transmitted using eight or less resource blocks or eight or more resource blocks according to the next channel status as necessary.

According to the above-mentioned classification, the HARQ schemes may have four HARQ combinations. According to unique characteristics of the above- mentioned schemes, the most preferred HARQ combinations of the HARQ schemes are an asynchronous channel-adaptive HARQ scheme, and a synchronous channel-non-adaptive scheme.

The 3GPP Draft R1-061338, entitled "Low Overhead Asynchronous Adaptive Hybrid ARQ", describes an asynchronous and adaptive HARQ scheme for an E-UTRA downlink.

European patent application No. 1 545 040 A1 describes a HARQ protocol with synchronous retransmissions.

European patent application No. 1 557 968 A1 describes a method for switching between asynchronous and synchronous HARQ retransmission modes.

Generally, the asynchronous channel-adaptive HARQ scheme adaptively changes a retransmission timing point and the amount of used resources to others according to a channel status, so that it can maximize the retransmission efficiency. However, the above-mentioned asynchronous channel-adaptive HARQ scheme has a disadvantage in that it unavoidably increases an amount of overhead, so that it is not generally considered for an uplink.

In the meantime, the asynchronous channel-non-adaptive HARQ scheme has an advantage in that there is almost no overhead because the retransmission timing and the resource allocation for retransmission are predetermined in a system. However, if the asynchronous channel-non-adaptive HARQ scheme is used under an excessively-changing channel status, retransmission efficiency is excessively decreased.

Therefore, if a user terminal is capable of maintaining the channel status in a relatively constant mode or is incapable of predicting the channel status, it has difficulty in reflecting the channel status, so that the synchronous channel-non-adaptive HARQ scheme irrelevant to the change of the channel status may have an advantage over the asynchronous channel-non-adaptive HARQ scheme.

### [Disclosure]

### [Technical Problem]

The asynchronous channel-adaptive HARQ scheme adaptively changes the retransmission timing, the amount of used resources, and the MCS level to others according to the channel status, so that retransmission efficiency can be maximized whereas the overhead increases.

Specifically, if the user terminal is located at a cell edge or has a poor channel situation, it must retransmit data to successfully receive the data. However, the overhead problem becomes more serious under the above-mentioned situation. Also, the user terminal must always receive at least one control signal associated with a retransmission packet after performing data retransmission, and must always open the received control signal, resulting in greater inconvenience of use.

Accordingly, the present invention is directed to a transmission method for use in a multi-carrier system that substantially obviates one or more problems due to limitations and disadvantages of the related art.

An object of the present invention is to provide a method for more smoothly re-transmitting data.

Another object of the present invention is to provide a method for reducing an amount of overhead associated with a control channel required for data retransmission.

Another object of the present invention is to provide a method for reducing an amount of retransmission overhead in a system based on an asynchronous retransmission scheme.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### [Technical Solution]

The asynchronous channel-adaptive retransmission scheme has a disadvantage in that it requires a large amount of overhead for retransmission. However, the asynchronous channel-adaptive retransmission scheme is able to convert the data transmission resource block and/or the MCS level into data of the better transmission format according to a variation in channel status or variation in system data's load, so that it can properly cope with the above-mentioned variation in channel status or system data's load.

Therefore, considering the advantages of the asynchronous channel-adaptive retransmission scheme, to achieve these objects and other advantages and in accordance with the purpose of the invention, as embodied and broadly described herein, a retransmission method in an asynchronous retransmission scheme based multi-carrier system comprises: transmitting data and scheduling information including synchronous duration information for operating a synchronous retransmission scheme; receiving a retransmission request signal of the data; and retransmitting the data without scheduling information at a timing based on the synchronous retransmission scheme; wherein the synchronous duration information is indicative of information corresponding to the number of retransmission times (n1), and a retransmission interval is predetermined, so that a total synchronous duration can be recognized on the basis of the transmitted synchronous duration information and the predetermined retransmission interval.

In another aspect of the present invention, there is provided a retransmission method in an asynchronous retransmission scheme based multi-carrier system comprising: receiving data and scheduling information including synchronous duration information for operating a synchronous retransmission scheme; transmitting a retransmission request of the data; and receiving retransmitted data without scheduling information at a timing according to the synchronous retransmission scheme, wherein the synchronous duration information is indicative of information corresponding to the number of retransmission times (n1), and a retransmission interval is predetermined, so that a total synchronous duration can be recognized on the basis of the transmitted synchronous duration information and the predetermined retransmission interval.

The following embodiments will be applied to the exemplary case in which data of downlink transmission is retransmitted in a communication system. However, the technical scope of the present invention is not limited to the above-mentioned downlink retransmission, and can also be applied to a variety of cases according to characteristics of the communication system.

It is to be understood that both the foregoing general description and the following detailed description of the present invention are exemplary and explanatory and are intended to provide further explanation of the invention as claimed.

### [Advantageous Effects]

If the asynchronous retransmission scheme is generally used in the uplink or downlink, the present invention can greatly reduce the amount of overhead of a control channel. Therefore, data communication between the base station and the user terminal can be more effectively operated.

### [Description of Drawings]

The accompanying drawings, which are included to provide a further understanding of the invention, illustrate embodiments of the invention and together with the description serve to explain the principle of the invention.

In the drawings:
FIG. 1 is a conceptual diagram illustrating a time-frequency resource block;
FIG. 2 is a conceptual diagram illustrating a retransmission method for use in a multi-carrier system according to an embodiment of the present invention;
FIG. 3 is a conceptual diagram illustrating a retransmission method for use in a multi-carrier system according to an embodiment of the present invention;
FIG. 4 is a conceptual diagram illustrating a retransmission method for use in a multi-carrier system according to another embodiment of the present invention;
FIG. 5 is a conceptual diagram illustrating a retransmission method for use in a multi-carrier system according to yet another embodiment of the present invention; and
FIG. 6 is a conceptual diagram illustrating a retransmission method for use in a multi-carrier system according to yet another embodiment of the present invention.

### [Best Mode]

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

It should be noted that the following embodiments will apply the scope or effect of the present invention to downlink transmission. For the convenience of description and better understanding of the present invention, it is assumed that a retransmission scheme for above-mentioned .downlink transmission is set to an asynchronous channel-adaptive HARQ scheme.

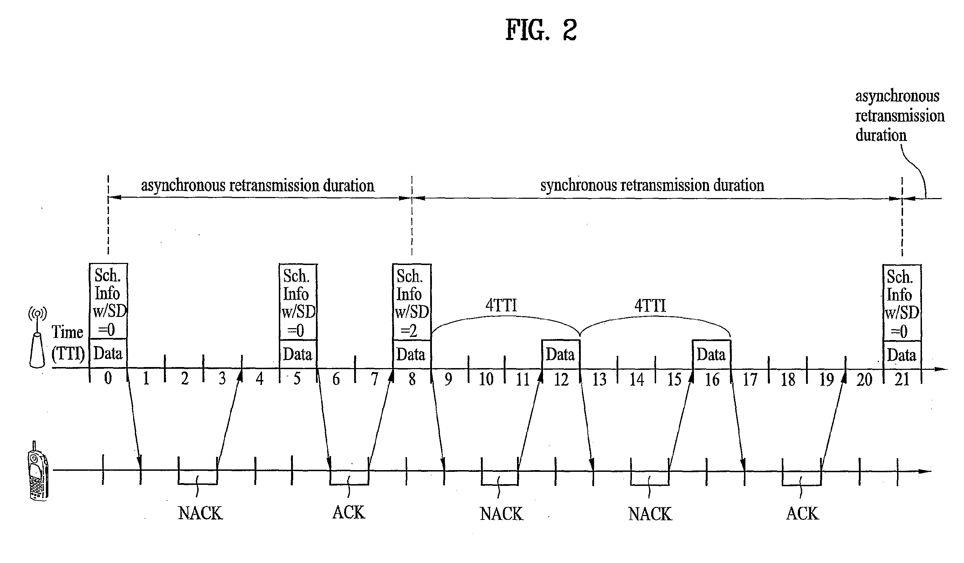

FIG. 2 is a conceptual diagram illustrating the retransmission method for use in a multi-carrier system according to an embodiment of the present invention. The downlink transmission according to the present invention is designed to combine the asynchronous retransmission method and the synchronous retransmission method.

Referring to FIG. 2, if there are a plurality of data units to be downlink-transmitted to several terminals, a base station selects a specific terminal (also called a user equipment (UE)) which will receive downlink transmission data for every transmission unit. In this case the base station can select the UE according to predetermined priority metric information.

The terminals report information of a downlink channel quality indicator (CQI) to the base station in an uplink direction.

The base station recognizes a channels status of each terminal using the CQI information received from the terminals, and selects terminals which will receive downlink data within each frequency band for each transmission unit.

The base station transmits downlink data to the selected terminal via the selected frequency band. According to the downlink transmission of data, the base station transmits not only the data but also a control signal associated with scheduling information to the corresponding terminal via a frequency band of a predetermined control channel of the corresponding terminal.

If the base station transmits data to the terminal, it transmits transmission timing information and resource information of the data transmission, so that it enables the terminal receiving the transmission data.

In the case of an initial transmission or a retransmission based on an asynchronous retransmission scheme, the terminal is unable to recognize a data transmission time at which the base station transmits data to the terminal, so that the base station transmits not only the data but also scheduling information required for receiving the aforementioned data to the terminal.

In this case, the scheduling information includes a user equipment identifier (UE ID), RB allocation information, and transmission data information (i.e., payload). If required, the scheduling information may further include IR version information associated with the number of retransmission times, HARQ process index information indicating which one of HARQ processes is used, and a new data indicator capable of distinguishing between initial transmission data and retransmission data.

This embodiment includes specific information in the scheduling information. This specific information indicates which one of the asynchronous retransmission scheme and the synchronous retransmission scheme will be used. The following description will disclose a specific case in which data is transmitted from the base station to the user terminal.

The scheduling information may further include specific information indicating which one of the synchronous retransmission scheme and the asynchronous retransmission scheme will be used.

In other words, if the base station decides to perform the asynchronous retransmission of data, it transmits information indicating the decision result to the user terminal, and transmits not only the scheduling information but also the data to the user terminal during the next retransmission, so that the asynchronous retransmission of data is implemented.

If the base station decides to perform the synchronous retransmission of data, it transmits information indicating the decision result to the user terminal, and retransmits the data using the synchronous retransmission scheme capable of transmitting only the data without including the scheduling information.

An example of the above-mentioned specific information, indicating which one of the synchronous retransmission scheme and the asynchronous retransmission scheme will be used, may be set to retransmission duration information.

In other words, in order to distinguish between the synchronous retransmission scheme and the asynchronous retransmission scheme, information of the synchronous duration (SD) may be changed to another. Namely, a synchronous duration (SD) field may be added to a field of a control message associated with the scheduling. For the convenience of description, the above-mentioned synchronous duration field is referred to as an SD field.

If the synchronous retransmission is operated by the SD field, a specific synchronous retransmission interval for the next retransmission after a previous transmission duration must be predetermined by the system. If this field is set to "0", not only the data to be retransmitted by the retransmission scheduling but also the scheduling information are transmitted according to the asynchronous retransmission method.

If the SD field value is set to another value higher than the value of "0", the synchronous retransmission of data is operated without transmitting additional scheduling information, for a synchronous duration determined according to the SD field setup value.

An exemplary setup value of the SD field may be the number of retransmission times. In more detail, in the case of using the asynchronous retransmission method, if a synchronous retransmission interval is predetermined to define the retransmission timing, and information indicating the number of synchronous retransmission times of data transmitted via the SD field is transmitted, the SD can be defined.

Referring to FIG. 2, the base station transmits scheduling information including the SD field of "0" and data to the user terminal, as denoted by TTI=0.

Upon receiving the scheduling information and the data from the base station, the user terminal transmits the NACK signal capable of requesting data retransmission to the base station. Since the SD field value is set to "0" in the scheduling information, the next retransmission is operated according to the asynchronous retransmission method. The base station retransmits the scheduling information and the data, as denoted by TTI=5.

The user terminal receiving the above-mentioned retransmission data transmits the ACK signal to the base station, so that the above-mentioned data transmission is completed and the base station transmits new data to the user terminal.

In this case, the base station sets the SD field value to "2" to perform the synchronous retransmission, as denoted by TTI=8. The user terminal receiving both the scheduling information and the data can recognize that the next two retransmission actions will be synchronously operated by referring to the above-mentioned scheduling information.

Provided that the synchronous retransmission interval is preset to "4 TTIs", the above-mentioned user terminal can recognize that the retransmission action could be operated at timing points TTI=12 and TTI=16.

In other words, if the user terminal retransmits the NACK signal to request data retransmission, the base station performs the data retransmission at the aforementioned predetermined timing points. In this case, since the user terminal has previously recognized the retransmission timing information and the transmission resources although there is no scheduling information associated with the retransmission, the base station need not transmit the scheduling information. Namely, the synchronous retransmission of data is operated, as denoted by TTI=12.

If the user terminal transmits the NACK signal to the base station in order to request more retransmission of the above-mentioned retransmission data, data other than the scheduling information is retransmitted at the above-mentioned predetermined timing points, as denoted by TTI=16.

It can be considered that the retransmission from the timing point TTI=0 to the timing point TTI=7 has been operated according to the asynchronous retransmission scheme. It can be considered that the retransmission from the timing point TTI=8 to the timing point TTI=16 has been operated according to the synchronous retransmission scheme. By the SD information transmission, the both retransmission schemes can be flexibly used together.

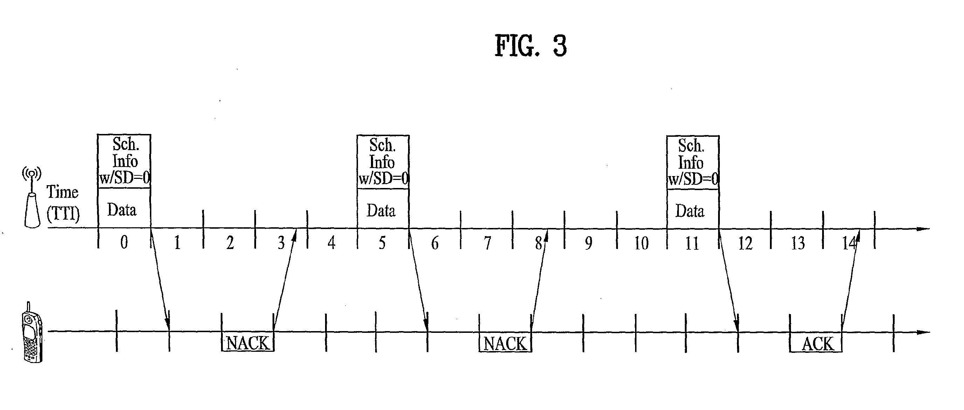

FIG. 3 is a conceptual diagram illustrating a retransmission method for use in a multi-carrier system according to an embodiment of the present invention.

A detailed description of the asynchronous retransmission duration operated according to the asynchronous retransmission scheme shown in FIG. 2 will be disclosed with reference to FIG. 3.

Referring to FIG. 3, the base station selects a user terminal which will transmit data in a downlink direction, and transmits the data to the selected user terminal, as denoted by TTI=0. In this case, the base station can also transmit the downlink scheduling information simultaneously while transmitting the above-mentioned data.

The scheduling information includes the above-mentioned SD field. If the SD field value indicates the number of retransmission times, information corresponding to the value of 0 is inserted in the above-mentioned scheduling information. Namely, information, indicating that the asynchronous retransmission scheme will be used, is transmitted to the user terminal via the SD field.

The above-mentioned scheduling information includes UE ID information, RB allocation information, and payload information, etc., as previously stated above.

If required, the scheduling information may further include IR version information associated with the number of retransmission times, HARQ process index information, and a new data indicator capable of distinguishing between initial transmission data and retransmission data.

If the user terminal receives the scheduling information and the data, it may transmit the ACK or NACK signal to the base station according to the transmission success or transmission failure of reception (Rx) data.

If the base station receives the ACK signal, it does not perform the retransmission, and allocates transmission resources to either new data of the UE or a new UE, so that it transmits the new data.

If the base station receives the NACK signal, it retransmits the data, having been transmitted to the user terminal, to the user terminal, as denoted by TTI=5. In this case, since the base station sets the SD field value to the value of "0", the next retransmission is also operated by the asynchronous channel-adaptive HARQ scheme. In more detail, a timing point at which data will be retransmitted, the size of a resource block to be used, and the location of the resource block are not fixed, so that the base station retransmits not only the data but also the scheduling information associated with the retransmission to the user terminal, as denoted by TTI=5.

After receiving the above-mentioned retransmission data, the user terminal transmits the ACK/NACK signal according to status information of the received data. As shown in FIG. 3, if the user terminal retransmits the NACK signal to the base station, the base station performs the retransmission by the NACK signal, and at the same time transmits the scheduling information including the retransmission timing and the transmission resource block, as denoted by TTI=11. Regarding the above-mentioned retransmission, the user terminal transmits the ACK signal to the base station, so that transmission of the above-mentioned data is completed.

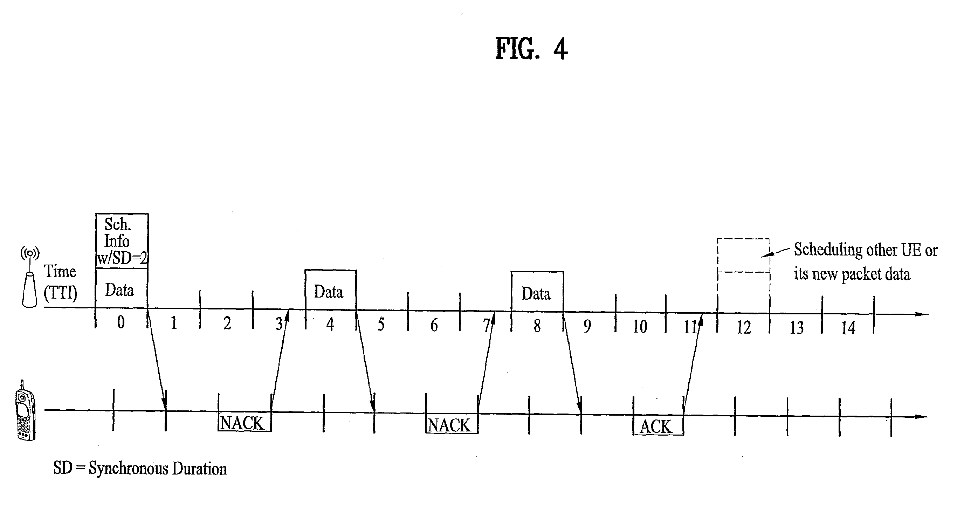

FIG. 4 is a conceptual diagram illustrating a retransmission method for use in a multi-carrier system according to another embodiment of the present invention.

A detailed description of synchronous retransmission duration operated according to the synchronous retransmission scheme shown in FIG. 2 will be disclosed with reference to FIG. 4.

Referring to FIG. 4, SD information, indicating which one of the synchronous retransmission scheme and the asynchronous retransmission scheme will be used, is transmitted to the user terminal along with the scheduling information. For example, a synchronous duration (SD) field may be added to a field of a scheduling-associated control message which will be transmitted every retransmission timing point.

If the SD field value is set to another value higher than the value of "0", the synchronous retransmission of data is operated without transmitting additional retransmission scheduling information, for a synchronous retransmission duration predetermined corresponding to the SD field value.

For example, if the SD field value is set to "2" and the base station transmits the scheduling information to the user terminal, the synchronous retransmission of data is operated during a synchronous retransmission duration predetermined corresponding to the SD field value. If the user terminal transmits the NACK signal associated with the data transmission to the base station, the base station receiving the NACK signal performs retransmission of the data at a predetermined timing according to a predetermined transmission scheme. Therefore, in the case of the above-mentioned data transmission, the scheduling information is not transmitted to the user terminal, and only the data is transmitted to the user terminal.

A method for allowing the base station to perform the synchronous retransmission of data other than the scheduling information on the condition that information corresponding to a specific value is higher than "0" is inserted in the SD field will hereinafter be described.

In order to perform the synchronous retransmission, retransmission timing information and a retransmission method, etc., should be notified to a corresponding user terminal as described above.

The base station can retransmit data using the retransmission scheme decided by the system, or can retransmit data using the initial transmission scheme.

An exemplary method for allowing the user terminal to recognize the timing information for retransmission will hereinafter be described.

A synchronous retransmission interval (i.e., retransmission period) for performing the synchronous retransmission is predetermined in the system, and information indicating the number of retransmission times is transmitted via the SD field.

If the retransmission interval associated with the retransmission timing is predetermined in the system, The UE receives the SD field information and performs the data retransmission at every retransmission timing placed after the previous transmission as much as the number of retransmission times according to the SD field information.

That is, in this case, the number of the above-mentioned data transmissions is equal to the number of retransmission times based on the SD field information. Therefore, the user terminal can recognize the retransmission timing information on the basis of the predetermined retransmission interval, and can also recognize how long the synchronous retransmission would last on the basis of the number of retransmission times.

A variety of methods for allowing the user terminal to pre-recognize the RB location and size information and the coding and modulation scheme information when data retransmission is operated during the synchronous retransmission duration will hereinafter be described in detail.

First of all, a method for pre-establishing the above-mentioned information in the system may be used as necessary. In more detail, if data retransmission is operated during the above-mentioned synchronous retransmission duration (i.e., SD), the system may predetermine which one of modulation and coding schemes will be used.

If the base station transmits specific information capable of commanding data retransmission associated with the SD to the user terminal, the data retransmission is performed by the above-mentioned scheme determined by the system during the next data retransmission operated by the next retransmission request of the user terminal.

Next, a method for performing the data retransmission using resource blocks, which are located at the same locations as those of resources blocks (RBs) used for initial transmission and have the same quantities as those of the RBs, will hereinafter be described. In more detail, there is no difference between transmission resources used for the initial transmission and other transmission resources to be used for the retransmission of data, because the above-mentioned transmission resources are based on the same RB information and the same Tx scheme information.

Referring to FIG. 4, the base station selects a user terminal which will transmit data in a downlink direction, and transmits the data to the selected user terminal, as denoted by TTI=0. In this case, the base station can also transmit the downlink scheduling information simultaneously while transmitting the above-mentioned data.

The scheduling information may include the above-mentioned SD field. In this case, it is assumed that the SD field value indicates the number of synchronous retransmission times, and the synchronous retransmission interval is set to four transmission time intervals (i.e., 4 TTIs). According to the embodiment of FIG. 4, information corresponding to the value of "2" is inserted in the above-mentioned scheduling information. Namely, information, indicating that the synchronous retransmission scheme will be used, is transmitted to the user terminal via the SD field.

According to the transmitted SD field information, the synchronous retransmission is operated for a predetermined time equal or less than two times the above-mentioned established SD value. In brief, the synchronous retransmission is operated a maximum of two times. As a result, if the next retransmission is requested, the base station may retransmit corresponding data at the timing point as denoted by TTI=4 after the 4 TTIs have elapsed, and may also retransmit the corresponding data at the timing point as denoted by TTI=8 equal to "2 X (4 TTI)". In the case of the above-mentioned retransmission, the base station may not transmit the scheduling information to the user terminal.

If the SD field value is set to another value higher than the value of "0" on the condition that the base station transmits the scheduling-associated control signal, the HARQ action is operated by the synchronous HARQ scheme during the established synchronous duration, resulting in reduction of overhead in the control signal for the retransmission.

According to the method proposed by the present invention, if the base station decides to retransmit data according to the synchronous channel-non-adaptive HARQ scheme while the asynchronous channel-adaptive HARQ scheme is executed, the SD field value of the scheduling information is set to an integer number higher than "0".

As can be seen from FIG. 4, if the SD field value is set to "2" while the base station is driven by the asynchronous channel-adaptive HARQ scheme at ordinary times, this SD field value of "2" is transmitted to a corresponding user terminal so that the user terminal can recognize that the next two retransmission times can be operated by the synchronous retransmission scheme.

During the synchronous retransmission duration, the user terminal can recognize that data would be transmitted from the base station to the user terminal itself although there is no scheduling information. As a result, the base station can reduce the amount of retransmission overhead as necessary.

In the case where data is retransmitted according to the synchronous retransmission scheme, the RB- size, location, and quantity may be the same as those of the previously-transmitted RBs. Otherwise, according to the rule decided by the system between the base station and the user terminal, the size and location of the previously-transmitted RBs may be different from those of retransmission RBs.

In the case where the synchronous retransmission is operated by transmission of SD field information and the base station performs the synchronous retransmission of data a predetermined number of times defined in the SD field and then receives the ACK signal, the base station re-performs the scheduling of new data. The above-mentioned new data scheduling may be set to the scheduling for transmitting the new data to the user terminal, or may also be set to the other scheduling for transmitting data to other user terminals. In this case, the base station may inform the user terminal of which one of the synchronous retransmission scheme and the asynchronous retransmission scheme will be applied to the data retransmission.

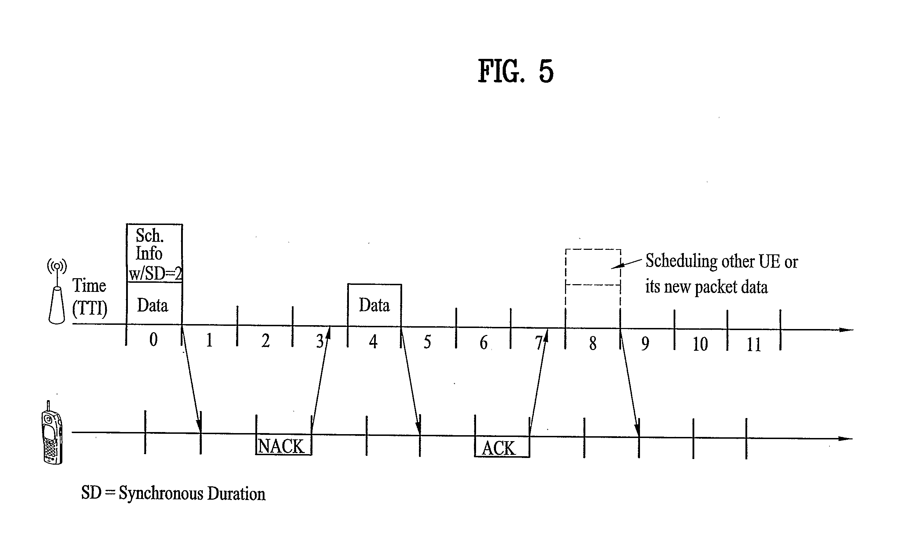

FIG. 5 is a conceptual diagram illustrating a retransmission method for use in a multi-carrier system according to yet another embodiment of the present invention.

FIG. 5 discloses a retransmission method, which is executed when data transmission is successfully transmitted before the predetermined SD. In the same manner as in the above-mentioned embodiments, the embodiment of FIG. 5 assumes that the synchronous retransmission interval for the synchronous retransmission is set to four TTIs (i.e., 4 TTIs).

The base station transmits scheduling information or data at the timing TTI=0. The scheduling information includes the SD field as described above, and sets the SD field value, so that it determines which one of the synchronous retransmission scheme and the asynchronous retransmission scheme will be used by referring to the SD field value.

If the synchronous retransmission is determined, the base station may inform the user terminal of how long the synchronous retransmission would last. As shown in FIG. 4, the base station sets the SD field value to "2" when transmitting the scheduling information, and then transmits data to the user terminal.

Upon receiving the data and the scheduling information from the base station, the user terminal can recognize that the next two retransmission actions will be synchronously operated on the basis of the above-mentioned scheduling information.

If required, the user terminal transmits the NACK signal to the base station, and the base station receives the NACK signal from the user terminal at TTI=3. Upon receiving the NACK signal, the base station performs retransmission of the data. In this case, the SD field value in the previous transmission denoted by TTI=0 has been set to "2" instead of "0", so that the above-mentioned retransmission is synchronously operated.

In other words, it is considered that the data retransmission is reserved at the timing points TTI=4 and TTI=8 according to the predetermined synchronous retransmission interval (i.e., 4 TTIs). The base station performs first retransmission at the above-mentioned known timing TTI=4. If the user terminal receives the data by the above-mentioned retransmission, it transmits the ACK/NACK signal associated with the retransmission data to the base station.

In this case, the user terminal transmits the ACK signal to the base station, i.e., data reception is successfully operated before the number of retransmission times reaches the number of synchronous retransmission times decided by the SD field value. Therefore, there is no need for the base station to use a corresponding resource block for the above-mentioned retransmission at the above-mentioned known timing TTI=8.

Therefore, if required, the base station may newly schedule the remaining transmission resources, to use the scheduled resources for either new data associated with the above-mentioned terminal or data to be transmitted to the new terminal.

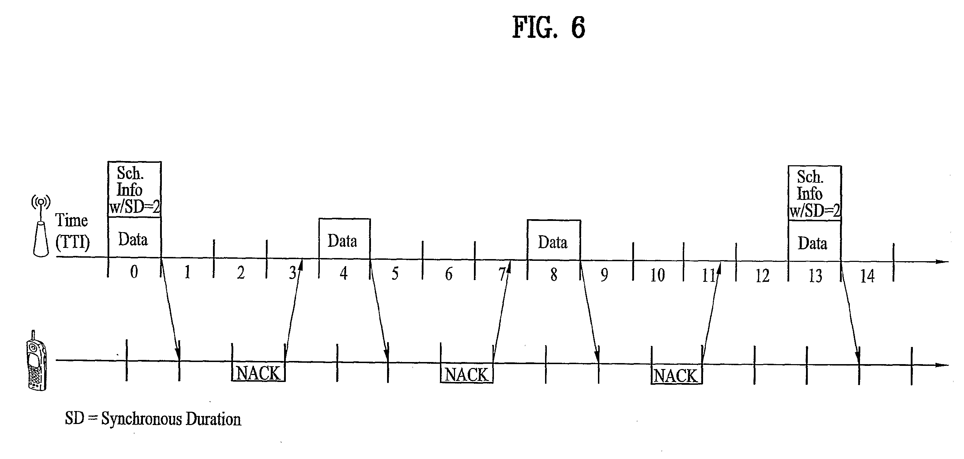

FIG. 6 is a conceptual diagram illustrating a retransmission method for use in a multi-carrier system according to yet another embodiment of the present invention.

FIG. 6 shows a retransmission method for a specific case in which a data transmission failure occurs although data has been retransmitted during the predetermined SD so that the user terminal transmits again the data retransmission request to the base station. Similar to the previously-stated embodiments, the embodiment of FIG. 6 assumes that the synchronous retransmission interval is set to four TTIs (i.e., 4 TTIs).

When the base station transmits data along with the scheduling information, the SD field value of the control message associated with the scheduling information is set to "2", and is then transmitted at the timing TTI=0.

The next two retransmission actions are synchronously operated at the timing points TTI=4 and TTI=8.

In this case, if a data reception failure occurs, the base station receives the NACK signal from the user terminal. The base station retransmits the data and the scheduling information to the user terminal. In this case, it should be noted that the number of previous retransmission times and the number of retransmission times associated with the above-mentioned retransmission must not exceed a maximum retransmission number indicating the maximum number of retransmission times. The retransmission operated after the retransmission may be synchronously or asynchronously operated according to the SD field value.

The base station informs the user terminal of the asynchronous retransmission scheme or synchronous retransmission scheme to be applied to the data. If the synchronous retransmission scheme is determined, the base station informs the user terminal of how long the synchronous retransmission of data would last, so that the synchronous retransmission scheme and the asynchronous retransmission scheme may be properly combined with each other as necessary.

If the base station adds the SD field to the scheduling information to inform the user terminal of the above-mentioned information, there may be used the following mapping table in which the SD field setup value and the actual SD information are defined, as shown in the following Table 1.

**[Table 1]**

| Synchronous duration field | Synchronous duration |
|---|---|
| 00 | 0 |
| 01 | 1 |
| 10 | 2 |
| 11 | 4 |

The above-mentioned Table 1 shows the mapping relationship between a synchronous duration field composed of 2 bits and the actual SD (i.e., the number of synchronous non-adaptive retransmission times).

If the SD field value of "00" is transmitted, the base station indicates that the SD value is set to "0" so that the next retransmission will be asynchronously operated.

If the SD field value of "01" is transmitted, this means that the SD value is set to "1" so that the next one retransmission will be synchronously operated without transmitting additional retransmission scheduling information.

If the SD field value of "10" is transmitted, this means that the next two retransmissions will be synchronously retransmitted in the same manner as in the above-mentioned case of the SD field value "01". If the SD field value of "11" is transmitted, this means that the next four retransmissions will be synchronously retransmitted in the same manner as in the above-mentioned case of the SD field value "01".

The above-mentioned mapping relationship between the field values and the number of actual retransmission times has been disclosed for only illustrative purposes. The bits contained in the SD field may be set to 2 bits or at least 3 bits. If bits of more than the 3 bits are used, information associated with many more retransmission times can be transmitted whereas the overhead unavoidably increases. Although the number of retransmission times has been set to 0, 1, 2, and 4 in the above-mentioned embodiments, the scope of the present invention is not limited to the above-mentioned embodiments, and the number of the retransmission times can also be set to other numbers.

If the system basically uses the asynchronous retransmission scheme as a retransmission scheme for the system, the overhead associated with scheduling information in the control message may encounter a serious problem in the asynchronous retransmission scheme. Under this condition, if there is little or no difference in quality although data retransmission has been non-adaptively operated without using the above-mentioned control information, the asynchronous retransmission scheme may be changed to the synchronous retransmission scheme having less overhead, resulting in reduction of the overhead.

If the channel status is excessively changed to another status while the synchronous retransmission scheme is mainly used, the scheduling-based retransmission method can be more effectively used.

In this case, the base station according to the present invention can retransmit data using the best retransmission method suitable for the channel situation. Also, the present invention may not adhere to any one of the retransmission methods, and can thus properly cope with a communication situation such as a channel status.

The SD field can be added to each scheduling information and/or control message of all the user terminals contained in the system, so that the above-mentioned asynchronous retransmission scheme may also be combined with the synchronous retransmission scheme. However, if the SD field is added to each scheduling information and/or control message of all the user terminals and is then transmitted, overhead may occur in the control signal. According to a variety of terminal situations, if some terminals use the above-mentioned SD field, they may acquire a gain according to terminal situations, and other terminals may acquire unexpected overhead. Therefore, the present invention can be properly applied to such terminals according to the terminal types. Two representative methods capable of educing the overhead will hereinafter be described.

A first method does not directly transmit the SD field information over a control channel, and transmits the SD field information using an upper-layer signaling process. In this case, information capable of being notified to the user terminal via the SD field is predefined in each user terminal. Namely, the SD information is established for each terminal in the upper layer, the established information can be flexibly applied for the individual user terminals, and may reduce overhead caused by transmission of the control signal.

A second method allows the SD field to be transmitted to only a specific terminal over a control channel. In this case, some terminals may have the SD field in the control channel, and other terminals may have the SD field in the control channel.

The most important signal for activating the HARQ scheme is the ACK/NACK signal. It is preferable that no error occurs in the ACK/NACK signal however, sometimes an unexpected error may occur in the ACK/NACK signal. In more detail, provided that the user terminal transmits the ACK signal to the base station upon receiving data from the base station, and the base station mistakes the ACK signal for the NACK signal due to a bad channel condition, the base station performs data retransmission. In this case, the system is less affected by the above-mentioned faulty operation.

However, if the base station mistakes the NACK signal for the ACK signal, the user terminal waits for retransmission data however, the base station performs new scheduling and transmits data according to the new scheduling result, so that pre-transmitted data may have a reception error. Therefore, the ACK/NACK signal should be designed to reduce the error rate of the signal. Specifically, the error rate for mistaking the NACK signal for the ACK signal should be low.

The present invention can reduce the overhead, so that it can be easily applied to a downlink of the 3GPP LTE (Long Term Evolution), and can also be applied to an uplink of the 3GPP LTE. Some terms disclosed in the present invention may be replaced with others as necessary. For example, the base station may also be called a Node-B, and the user terminal may also be called a mobile station or a user equipment (UE), etc.

It should be noted that most terminology disclosed in the present invention is defined in consideration of functions of the present invention, and can be differently determined according to intention of those skilled in the art or usual practices. Therefore, it is preferable that the above-mentioned terminology be understood on the basis of all contents disclosed in the present invention.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

### [Industrial Applicability]

As apparent from the above description, if the asynchronous retransmission scheme is generally used in the uplink or downlink, the present invention can greatly reduce the amount of overhead of a questionable control channel. Therefore, data communication between the base station and the user terminal can be more effectively operated. The present invention reduces an amount of overhead associated with a control channel required for data retransmission. The present invention reduces an amount of retransmission overhead in a system based on an asynchronous retransmission scheme.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A retransmission method in an asynchronous retransmission scheme based multi-carrier system comprising:
transmitting data and scheduling information including synchronous duration information for operating a synchronous retransmission scheme;
receiving a retransmission request signal of the data; and
retransmitting the data without scheduling information at a timing based on the synchronous retransmission scheme;
wherein the synchronous duration information is indicative of information corresponding to the number of retransmission times (n1), and a retransmission interval is predetermined, so that a total synchronous duration can be recognized on the basis of the transmitted synchronous duration information and the predetermined retransmission interval.

2. The method according to claim 1, further comprising:
if the data is successfully received by retransmission actions of less than the number of retransmission times (n1), rescheduling a reserved resource block at the remaining retransmission timing points.

3. The method according to claim 2, wherein:
the step of rescheduling is operated for at least one of a new user and new data of the same user.

4. The method according to claim 1, further comprising:
if the data is unsuccessfully received although data retransmission is operated by the number of retransmission times (n1), transmitting scheduling information based on one of the asynchronous retransmission scheme and the synchronous retransmission scheme.

5. The method according to claim 4, wherein:
if a value of the synchronous duration information is set to "0", it is indicated that the synchronous retransmission scheme is not operated.

6. The method according to claim 4, further comprising:
if a value of the synchronous duration information is set to n2 (where n2 ≥ 1), performing retransmission actions by n2 times to the maximum according to the synchronous retransmission scheme.

7. A retransmission method in an asynchronous retransmission scheme based multi-carrier system comprising:
receiving data and scheduling information including synchronous duration information for operating a synchronous retransmission scheme;
transmitting a retransmission request of the data; and
receiving retransmitted data without scheduling information at a timing according to the synchronous retransmission scheme,
wherein the synchronous duration information is indicative of information corresponding to the number of retransmission times (n1), and a retransmission interval is predetermined, so that a total synchronous duration can be recognized on the basis of the transmitted synchronous duration information and the predetermined retransmission interval.

8. The method according to claim 1 or 7, wherein:
a transmission format based on the synchronous retransmission scheme is predetermined in a system.

9. The method according to claim 8, wherein:
if the data retransmission is required, the data is retransmitted according to the transmission format predetermined in the system.

## Patentansprüche

1. Verfahren zum Neusenden in einem Mehrträgersystem auf der Basis eines asynchronen Neusendungsschemas, umfassend:
Senden von Daten und Ansetzungsinformationen, umfassend Informationen über eine synchrone Dauer zum Betreiben eines synchronen Neusendungsschemas;
Empfangen eines Neusendungs-Anforderungssignals für die Daten; und
Neusenden der Daten ohne Ansetzungsinformationen zu einer Zeit auf der Basis des synchronen Neusendungsschemas;
wobei die Informationen über die synchrone Dauer Informationen anzeigen, welche der Anzahl der Neusendungen (n1) entsprechen, und ein Neusendungsintervall vorgegeben wird, so dass auf der Basis der gesendeten Informationen über die synchrone Dauer und des vorgegebenen Neusendungsintervalls eine synchrone Gesamtdauer erkannt werden kann.

2. Verfahren nach Anspruch 1, ferner umfassend:
wenn die Daten durch weniger Neusendungsvorgänge als die Anzahl der Neusendungen (n1) erfolgreich empfangen werden, Neuansetzen eines reservierten Ressourcenblocks auf die verbleibenden Neusendungs-Zeitpunkte.

3. Verfahren nach Anspruch 2, wobei:
der Schritt des Neuansetzens für mindestens eines aus einem neuen Benutzer und neuen Daten desselben Benutzers durchgeführt wird.

4. Verfahren nach Anspruch 1, ferner umfassend:
wenn die Daten nicht erfolgreich empfangen werden, obwohl die Datenneusendung so oft wie die Anzahl der Neusendungen (n1) durchgeführt wird, Senden von Ansetzungsinformationen auf der Basis von einem aus dem asynchronen Neusendungsschema und dem synchronen Neusendungsschema.

5. Verfahren nach Anspruch 4, wobei:
wenn ein Wert der Informationen über die synchrone Dauer auf "0" gesetzt ist, angezeigt ist, dass das synchrone Neusendungsschema nicht betrieben wird.

6. Verfahren nach Anspruch 4, ferner umfassend:
wenn ein Wert der Informationen über die synchrone Dauer auf n2 (wobei n2 ≥ 1) gesetzt ist, Durchführen von Neusendungsvorgängen für n2 Male bis zum Maximum gemäß dem synchronen Neusendungsschema.

7. Verfahren zum Neusenden in einem Mehrträgersystem auf der Basis eines asynchronen Neusendungsschemas, umfassend:
Empfangen von Daten und Ansetzungsinformationen, umfassend Informationen über eine synchrone Dauer zum Betreiben eines synchronen Neusendungsschemas;
Senden eines Neusendungsanforderung für die Daten; und
Empfangen neu gesendeter Daten ohne Ansetzungsinformationen zu einer Zeit gemäß dem synchronen Neusendungsschema;
wobei die Informationen über die synchrone Dauer Informationen anzeigen, welche der Anzahl der Neusendungen (n1) entsprechen, und ein Neusendungsintervall vorgegeben wird, so dass auf der Basis der gesendeten Informationen über die synchrone Dauer und des vorgegebenen Neusendungsintervalls eine synchrone Gesamtdauer erkannt werden kann.

8. Verfahren nach Anspruch 1 oder 7, wobei:
in einem System ein Sendeformat auf der Basis des synchronen Neusendungsschemas vorgegeben ist.

9. Verfahren nach Anspruch 8, wobei:
wenn die Datenneusendung erforderlich ist, die Daten gemäß dem Sendeformat neu gesendet werden, das in dem System vorgegeben ist.

## Revendications

1. Procédé de réémission dans un système multiporteuse basé sur un schéma de réémission asynchrone, comprenant
émettre des données et des informations d'ordonnancement incluant des informations de durée synchrone destinées à actionner un schéma de réémission synchrone ;
recevoir un signal de requête de réémission des données ; et
réémettre les données sans informations d'ordonnancement à un moment basé sur le schéma de réémission synchrone ;
dans lequel les informations de durée synchrone indiquent des informations correspondant au nombre d'occurrences de réémission (n1), et un intervalle de réémission est prédéterminé, de sorte qu'une durée synchrone totale puisse être reconnue en se basant sur les informations de durée synchrone émises et l'intervalle de réémission prédéterminé.

2. Procédé selon la revendication 1, comprenant en outre :
si les données sont reçues de façon correcte par des actions de réémission inférieures au nombre d'occurrences de réémission (n1), le réordonnancement d'un bloc de ressources réservé aux moments de réémission restants.

3. Procédé selon la revendication 2, dans lequel :
l'étape de réordonnancement est actionnée pour au moins l'un d'un nouvel utilisateur et de nouvelles données du même utilisateur.

4. Procédé selon la revendication 1, comprenant en outre :
si les données sont reçues de façon incorrecte bien que la réémission de données soit actionnée du nombre d'occurrences de réémission (n1), l'émission d'informations d'ordonnancement basée sur l'un du schéma de réémission asynchrone et du schéma de réémission synchrone.

5. Procédé selon la revendication 4, dans lequel :
si une valeur des informations de durée synchrone est fixée à « 0 », il est indiqué que le schéma de réémission synchrone n'est pas actionné.

6. Procédé selon la revendication 4, comprenant en outre :
si une valeur des informations de durée synchrone est fixée à n2 (où n2 ≥ 1), la réalisation d'actions de réémission de n2 occurrences au maximum selon le schéma de réémission synchrone.

7. Procédé de réémission dans un système multiporteuse basé sur un schéma de réémission asynchrone, comprenant :
recevoir des données et des informations d'ordonnancement incluant des informations de durée synchrone pour actionner un schéma de réémission synchrone ;
émettre une requête de réémission des données ; et
recevoir des données réémises sans informations d'ordonnancement à un moment selon le schéma de réémission synchrone,
dans lequel les informations de durée synchrone indiquent des informations correspondant au nombre d'occurrences de réémission (n1), et un intervalle de réémission est prédéterminé, de sorte qu'une durée synchrone totale puisse être reconnue en se basant sur les informations de durée synchrone émises et l'intervalle de réémission prédéterminé.

8. Procédé selon la revendication 1 ou 7, dans lequel :
un format d'émission basé sur le schéma de réémission synchrone est prédéterminé dans un système.

9. Procédé selon la revendication 8, dans lequel :
si la réémission de données est requise, les données sont réémises selon le format d'émission prédéterminé dans le système.
